# EUROPÄISCHE PATENTANMELDUNG

(11) **EP 0 887 009 A1**
(43) Veröffentlichungstag der Anmeldung: **30.12.1998**
(21) Anmeldenummer: 98110797.2
(22) Anmeldetag: 12.06.1998
(51) Int. Cl.: A01D 75/28

(54) **Erntemaschine, insbesondere Mähdrescher, mit Seitengang**

(30) Priorität: 28.06.1997 DE 19727570
(71) Anmelder: SAME DEUTZ-FAHR S.P.A., 24047 Treviglio (Bergamo) (IT)
(72) Erfinder: Von Allwörden, Wilhelm, 89168 Oberstotzingen (DE)
(74) Vertreter: Quinterno, Giuseppe

(57) **Zusammenfassung**

Erntemaschine (1), insbesondere Mähdrescher, mit einer im Frontbereich (2) der Erntemaschine (1) angeordneten, höhenverschwenkbaren Aufnahmevorrichtung (3) sowie einer Hangausgleichseinrichtung für die Erntemaschine oder Teile derselben, wobei eine Abtastvorrichtung (6) im Bereich der Aufnahmevorrichtung (3) vorgesehen ist, durch die die Hangausgleichseinrichtung steuerbar ist.

## Beschreibung

Die Erfindung betrifft eine Erntemaschine und ein Verfahren zum Betreiben einer Erntemaschine gemäß den Merkmalen des Oberbegriffes der unabhängigen Patentansprüche.

Aus dem deutschen Fachbuch 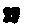 Lexikon der Landtechnik" aus dem Vogel-Fachbuch-Verlag ist eine Erntemaschine, insbesondere ein Mähdrescher mit einer im Frontbereich der Erntemaschine angeordneten, höhenverschwenkbaren Aufnahmevorrichtung sowie einer die Bodenverhältnisse erfassenden Abtastvorrichtung bekannt. Unter dem Stichwort 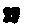 Tastregelung" ist in dem Fachbuch beschrieben, daß an der höhenverschwenkbaren Aufnahmevorrichtung Kufen vorgesehen sind, die die Aufnahmevorrichtung über den Boden führt, so daß also durch diese Kufen die Bodenverhältnisse erfaßt werden. Die Abtastvorrichtung hat den Zweck, die Aufnahmevorrichtung in einer bestimmten Höhe über dem Boden zu führen, um einerseits eine ausreichende Menge an Erntegut aufnehmen beziehungsweise ernten zu können und andererseits zu vermeiden, daß die Aufnahmevorrichtung in das Erdreich hineinfährt.
Es ist auch aus demselben Fachbuch bekannt, eine Hangausgleichseinrichtung vorzusehen, mittels der die Erntemaschine selbst durch Verstellen oder Verschwenken der Vorder- und/oder Hinterräder oder Teile der Erntemaschine, z.B. die Reinigungseinrichtung, waagerecht ausgerichtet werden. Dazu dient eine Regeleinheit, die die Neigung der Maschine, z.B. mittels eines Pendelschalters mißt und die Maschine bzw. die Teile derselben soweit nachsteuert, bis die Waagerechtstellung wieder erreicht ist. Diese Hangausgleichseinrichtung und deren Steuerung bzw. Regelung ist dann problemlos, wenn die Fahrgeschwindigkeit der Erntemaschine nicht so groß ist und die Bodenunebenheiten nicht zu stark sind, da eine Nachregelung erst dann erfolgt, wenn die Maschine sich bereits aus der Waagerechten bewegt.

Aufgabe der Erfindung ist es daher, eine Erntemaschine und ein Verfahren zum Betreiben einer Erntemaschine derart anzugeben, daß diese Nachteile vermieden werden und die Hangausgleichssteuerung möglichst frühzeitig einsetzt, da die Steuerung derartig schwerer Erntemaschinen nicht abrupt erfolgen kann. Darüber hinaus soll die Hangausgleichseinrichtung zusätzlich bzw. anstatt anderer Vorrichtungen zur Verstellung der Aufnahmevorrichtung genutzt werden.

Diese Aufgabe ist durch die Merkmale der beiden unabhängigen Patentansprüche gelöst.

Die Anordnung der Abtastvorrichtung im Bereich der Aufnahmevorrichtung oder im Bereich vor der Aufnahmevorrichtung hat den Vorteil, daß in dem Augenblick, in dem sich die Bodenverhältnisse im Bereich der Aufnahmevorrichtung ändern (beispielsweise aufgrund einer Steigung oder auch einer Seitenneigung) eine Ansteuerung der Hangausgleichseinrichtung erfolgt, und zuvor bevor die Erntemaschine aus der Waagerechten geneigt ist bzw. sich zu Neigen beginnt. Bei der Abtastvorrichtung kann es sich beispielsweise um Räder oder Kufen oder dergleichen handeln, die im Bereich der Aufnahmevorrichtung oder in einem Bereich davor (Halmteiler) angeordnet sind und deren Betätigung (Auslenkung) in Abhängigkeit der Änderung des Abstands zwischen Boden- und Aufnahmevorrichtung ein elektrisches Signal (beispielsweise durch ein Potentiometer) erzeugt, wobei dieses Signal zur Steuerung der Hangausgleichseinrichtung dient.

In Weiterbildung der Erfindung ist die Abtastvorrichtung mehrteilig ausgebildet, wodurch in Querrichtung der Aufnahmevorrichtung vorzugsweise zwei Kufen oder Räder, in der Spur vor den Vorderrädern vorgesehen sind.

In einer vorteilhaften Ausgestaltung weist die Hangausgleichseinrichtung zumindest zwei getrennt voneinander und/oder gemeinsam ansteuerbare Aktuatoren, die insbesondere als Hydraulikzylinder ausgebildet, sind, zur Höhenverstellung der Vorderräder auf. Werden die Hydraulikzylinder gemeinsam angesteuert, so kann eine Neigung des Bodens in Fahrtrichtung der Erntemaschine ausgeglichen werden, wobei eine getrennte Ansteuerung zu einem Ausgleich der Seitenneigung genutzt werden kann. Wird durch die Abstastvorrichtung eine entsprechende Änderung des Bodens aus der Waagerechten festgestellt, so, kann frühzeitig eine Ansteuerung der Hydraulikzylinder erfolgen, bevor die Waagerechtregelung nach Neigung der Maschine aus der Waagerechten, einsetzt. Zweckmäßigerweise wird aber diese Waagerechtregelung weiter benutzt und eingesetzt, so daß eine zweifach Ansteuerung der Hangausgleichseinrichtung erfolgt. Dabei kann die Abtastvorrichtung den zeitlichen Vorrang haben, während die Waagerechtregelung eine übersteuernde Funktion haben kann. Ist die Erntemaschine so ausgestaltet, daß die Aufnahmevorrichtung höhenverschwenkbar und um eine in Fahrtrichtung liegende Achse verdrehbar ausgebildet ist und diese Steuerung durch eine den Abstand zum Boden erfassende Abtastvorrichtung erfolgt, so bietet es sich an, diese Abtastvorrichtung ebenfalls zum Steuern der Hangausgleichseinrichtung einzusetzen. Dabei ist es zweckmäßig die durch die Steuerung bedingte Lageänderung der Aufnahmevorrichtung beim Ansteuern der Hangausgleichseinrichtung und umgekehrt zu berücksichtigen. Natürllich können aber auch sowohl die Steuerung der Aufnahmevorrichtung als auch die Steuerung der Hangausgleichseinrichtung getrennte Abtastvorrichtungen aufweisen.

Bei geeigneter Ansteuerung der Hangausgleichseinnchtung kann diese auch zur Anpassung der Aufnahmevorrichtung an Bodenunebenheiten genutzt werden. Dadurch kann die Verdrehbarkeit der Aufnahmevorrichtung um die in Fahrtrichtung liegende Achse, z.B. an der Anschlußstelle am Förderkanal für einen kleineren Schwenkwinkel ausgelegt sein bzw. entfallen.

In gewissen Grenzen kann die Hangausgleichseinrichtung bei gleichsinniger Verstellung im Sinne einer Neigungsverstellung in Fahrtrichtung auch die Höhenverschwenkbarkeit der Aufnahmevorrichtung um eine quer zur Fahrtrichtung liegende Achse ersetzen bzw. ergänzen bei Verstellung der Hangausgleichseinrichtung und der Aufnahmevorrichtung.

Von Bedeutung ist auch noch, daß durch eine gleichsinnige Verstellung der Hangausgleichseinrichtung auch eine Kompensation verschiedener Radgrößen erfolgen kann. Die Benutzung unterschiedlicher Radgrößen führt nämlich - wenn keine Anpassung erfolgt - zu Änderungen des optimalen Anstellwinkels der Aufnahmevorrichtung gegenüber dem Boden. Diese unerwünschte Änderung kann durch gleichsinnige Verstellung der Hangausgleichseinrichtung bzw. der Neidung der Erntemaschine in bzw. gegen die Fahrtrichtung ausgeglichen werden.

In Weiterbildung der Erfindung ist die Aufnahmevorrichtung mehrteilig ausgebildet und es ist jedem Teil der Aufnahmevorrichtung zumindest eine Abtastvorrichtung zugeordnet. Dies ist insbesondere bei überbreiten Aufnahmevorrichtungen, die sich wesentlich über die Breite der Erntemaschine erstrecken von Vorteil, da somit über die gesamte Breite der Aufnahmevorrichtung eine optimale Anpassung an die Bodenverhältnisse gegeben ist. Zu diesem Zweck ist in vorteilhafter Weise jedem Teil der Aufnahmevorrichtung zumindest ein von der Steuereinrichtung ansteuerbare Aktuator, vorzugsweise zwei Aktuatoren, zugeordnet.

Für das erfindungsgemäße Verfahren gelten die gleichen Vorteile wie für die erfindungsgemäß ausgestaltete Erntemaschine. Die aktive Vorsteuerung der Verstellung der Hangausgleichseinrichtung in Abhängigkeit der erfaßten Bodenverhältnisse hat auch bei dem Verfahren den Vorteil, daß die Bodenunebenheiten schon die Hangausgleichseinrichtung ansteuern, bevor die Waagerechtregelung ansprechen kann.

Bei der Erntemaschine handelt es sich in vorteilhafter Weise um einen Mähdrescher, wobei die Erfindung jedoch nicht auf einen solchen beschränkt ist. Bei der Aufnahmevorrichtung handelt es sich bei dem Mähdrescher um einen Schneidtisch mit Schneideinrichtung, Einzugswalze um anschließendem Förderkanal, wobei diese Ausgestaltung jedoch nur beispielhaft genannt ist. Bei der Aufnahmevorrichtung kann es sich auch um eine Pick-Up oder dergleichen handeln. Eine Ausgestaltung der Erntemaschine ist im folgenden beschrieben und anhand der Figuren erläutert.
Es zeigen:
- Figur 1:: einen Mähdrescher,
- Figur 2:: eine Steuereinrichtung.

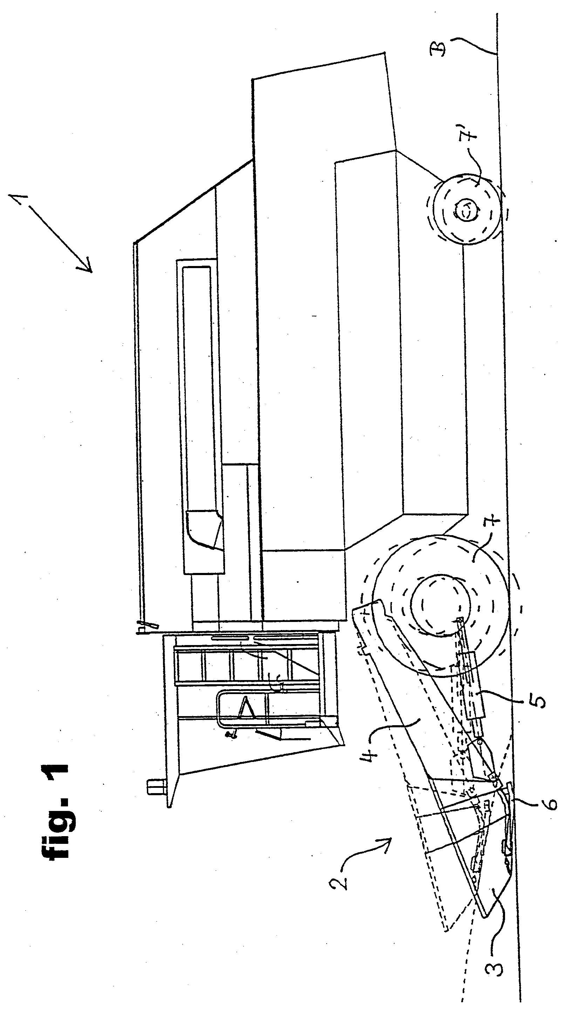

Figur 1 zeigt einen Mähdrescher 1, der in seinem Frontbereich 2 eine Aufnahmevorrichtung 3 aufweist. Diese Aufnahmevorrichtung 3 besteht in der Regel aus einem Schneidwerk mit einer nachgeordneten Einzugswalze, wobei das geschnittene und von der Einzugswalze zusammengeführte Erntegut (beispielsweise Getreide) in Richtung eines Förderkanales 4 bewegt wird. Der Förderkanal 4 ist am Rahmen des Mähdreschers 1 zumindest höhenverschwenkbar gelagert, wobei die Höhenverschwenkbarkeit in Figur 1 mittels zweier Hydraulikzylinder 5, die sich einerseits an dem Förderkanal 4 und andererseits am Rahmen oder der Vorderachse des Mähdreschers 1 abstützen, realisiert ist.

In dem Frontbereich 2, das heißt, im Bereich der Aufnahmevorrichtung 3, ist an der Aufnahmevorrichtung 3 eine Abtastvorrichtung 6 angeordnet, bei der es sich beispielsweise um auslenkbare Kufen handelt. Die Auslenkung der Kufen wird beispielsweise mittels eines staub- und feuchtigkeitsdichten Potentiometers in elektrische Signale umgesetzt, die einer Steuereinrichtung zugeführt werden.

Der Mähdrescher 1 weist weiterhin Vorderräder 7 und Hinterräder 7' auf, wobei die Vorderräder 7 gemeinsam oder getrennt voneinander antreibbar sind. Weiterhin sind die beiden Vorderräder 7 gemeinsam oder getrennt voneinander von nicht gezeigten Aktuatoren (Hydraulikzylindern) zur Niveau- beziehungsweise Hangausgleichsregulierung in Bezug auf den Boden B höhenverstellbar. Darüber hinaus ist auch ein Hangausgleich beziehungsweise ein Niveauausgleich mittels der Hinteräder 7', denen dann auch entsprechende Aktuatoren zugeordnet sind, möglich. Dazu ist eine Regeleinheit vorgesehen, die in Abhängigkeit der Neigung der Erntemaschine eine Waagerechtsteuerung, z.B. unter Zuhilfenahme eines Pendelschalters, vornimmt. Selbstverständlich kann die Niveau- und Hangausgleichsregulierung auch willkürlich per Hand vom Fahrer der Erntemaschine vorgenommen werden. In Figur 1 ist gestrichelt gezeigt der Ausgleich von Bodenunebenheiten an der Aufnahmevorrichtung 3, beispielsweise durch die aktive Ansteuerung der Hydraulikzylinder 5 in Abhängigkeit der Signale der Abtastvorrichtung 6, und der Vorderräder 7 sowie der Hinterräder 7 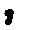 durch Ansteuerung der Hydraulikzylinder 9.

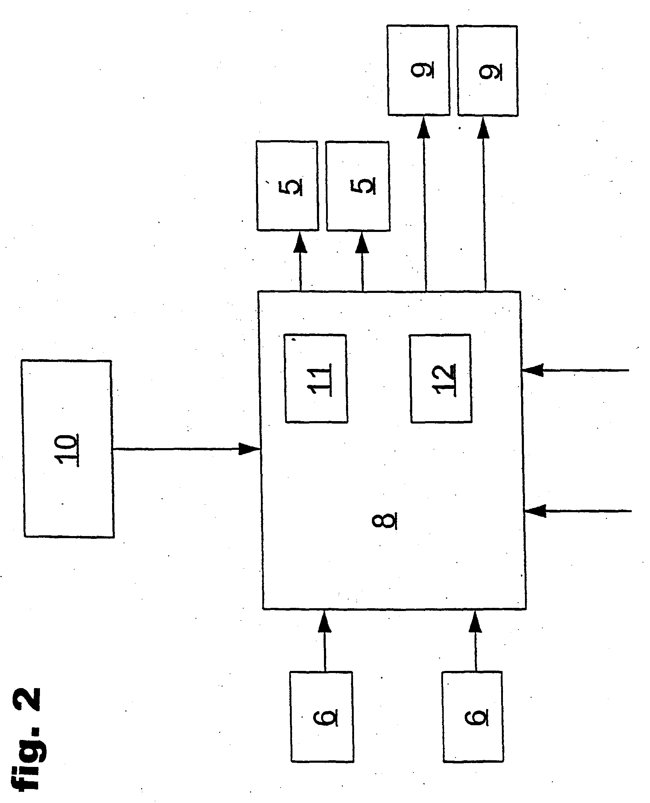

Figur 2 zeigt eine Steuereinrichtung 8, der die Signale der Abtastvorrichtung(en) 6 zugeführt werden. In Abhängigkeit dieser Signale und gegebenenfalls weiterer Signale werden
- bei ebenem Gelände zum Ausgleich von Bodenunebenheiten die zumindest zwei Hydralikzylinder 5 in Abhängigkeit der erfaßten Bodenverhältnisse angesteuert, um somit eine Höhenverschwenkung und gegebenenfalls ein Verdrehen der Aufnahmevorrichtung 3 zu realisieren. Zum Verdrehen sind getrennte Hydraulikzylinder vorgesehen, die eine Drehung der Aufnahmevorrichtung gegenüber dem Förderkanal 4 bewirken. Alternativ oder ergänzend dazu werden auch Aktuatoren (Hydraulikzylinder 9) gemeinsam angesteuert, die eine Höhenverstellung der Vorderräder 7 und ggfs. der Hinterräder 7 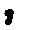 zu realisieren. Dadurch kann frühzeitig die Niveau- bzw. Hangausgleichsregelung angesteuert werden.
- bei Seitenneigung erfolgt eine getrennte Ansteuerung der Aktuatoren (Hydrauikzylinder 9) der Vorderräder 7, mit der die Seitenneigung des Mähdreschers 1 ausgeglichen werden kann.

Mit der Bezugsziffer 10 ist eine manuelle Vorgabe beispielsweise des Abstandes der Aufnahmevorrichtung 3 vom Boden, der aktiv gesteuert eingehalten werden soll, möglich. Die Steuereinrichtung 8 beinhaltet zumindest einen Regler 11 (gegebenenfalls mit Speicher), der zum Beispiel aus der Sollvorgabe des Abstandes, die mittels der manuellen Vorgabe 10 eingestellt wurde, und dem mittels der Abtastvorrichtung(en) 6 erfaßten Abstand eine Differenz bildet und diese weitestgehend zu Null ausregelt. Dazu steuert der Regler 11 eine oder mehrere Leistungsendstufen 12 an, die eine Verstellung der Hydraulikzylinder zum Ausgleich von horizontalen und/oder vertikalen Unebenheiten beziehungsweise Neigungen bewirken.

## Patentansprüche

1. Erntemaschine (1), insbesondere Mähdrescher, mit einer im Frontbereich (2) der Erntemaschine (1) angeordneten, höhenverschwenkbaren Aufnahmevorrichtung (3) sowie einer Hangausgleichseinrichtung, mit der die Seitenneigung und/oder die Neigung in Fahrtrichtung der Erntemachine zumindest teilweise ausgeglichen werden kann oder eine Waagerechtverstellung zumindest von Teilen der Erntemaschine, z.B. der Reinigungseinrichtung bei einem Mähdrescher, erfolgt,
**dadurch gekennzeichnet,** daß eine Abtastvorrichtung (6) im Bereich der Aufnahmevorrichtung (3) oder in einem Bereich vor der Aufnahmevorrichtung (3) zur Erfassung der Abstände zwischen dem Boden und der Aufnahmevorrichtung (3) vorgesehen ist, durch die die Hangausgleichseinrichtung steuerbar ist.

2. Erntemaschine (1) nach Anspruch 1,
**dadurch gekennzeichnet,** daß die Abtastvorrichtung (6) mehrteilig ausgebildet ist.

3. Erntemaschine (1) nach Anspruch 1 oder 2,
**dadurch gekennzeichnet,** daß die Hangausgleichseinrichtung zusätzlich und/oder anstatt einer Waagerechtregelung, z.B. mittels Pendelschalter, durch die Abtastvorrichtung (6) ansteuerbar ist.

4. Erntemaschine (1) nach einem der vorhergehenden Ansprüche, bei der die Aufnahmevorrichtung (3) von einer den Abstand zum Boden erfassenden Abtastvorrichtung (6) mittels Aktuatoren, insbesondere Hydraulikzylinder (5) höhenverschwenkbar oder um eine in Fahrtrichtung liegende Achse verdrehbar ist,
**dadurch gekennzeichnet,** die Abtastvorrichtung (6) sowohl zum Ansteuern der Aufnahmevorrichtung (3) als auch zum Steuern der Hangausgleichseinrichtung ausgebildet ist.

5. Erntemaschine (1) nach einem der vorhergehenden Ansprüche,
**dadurch gekennzeichnet,** daß die Bodenanpassung der Aufnahmevorrichtung durch Ansteuern der Hangausgleichseinrichtung erfolgt oder ergänzt wird.

6. Erntemaschine (1) nach einem der vorhergehenden Ansprüche,
**dadurch gekennzeichnet,** daß die Hangausgleichseinrichtung zumindest zwei getrennt voneinander und/oder gemeinsam ansteuerbare Aktuatoren, insbesondere Hydraulikzylinder (9), zur Niveaueinstellung der Vorderräder (7) aufweist.

7. Erntemaschine (1) nach einem der Ansprüche 1 oder 5,
**dadurch gekennzeichnet,** daß eine Steuereinrichtung (8) vorgesehen ist, die mit der Abtastvorrichtung (6) sowie den Aktuatoren [Hydraulikzylinder (5)] zur Höhenverschwenkung und/oder Verdrehen der Aufnahmevorrichtung (3) und/oder den Aktuatoren für die Hangausgleichseinrichtung, z.B. [Hydraulikzylinder (9)] zur Niveaueinstellung der Vorderräder (7), verschaltet ist.

8. Erntemaschine nach einem der vorhergehenden Ansprüche,
**dadurch gekennzeichnet,** daß die Aufnahmevorrichtung (3) mehrteilig ausgebildet ist und daß jedem Teil der Aufnahmevorrichtung (3) zumindest eine Abtastvorrichtung (6) zugeordnet ist.

9. Verfahren zum Betreiben einer Erntemaschine, insbesondere eines Mähdreschers, mit einer im Frontbereich der Erntemaschine angeordneten, höhenverschwenkbaren Aufnahmevorrichtung sowie einer den Bodenabstand erfassenden Abtastvorrichtung,
**dadurch gekennzeichnet,** daß in Abhängigkeit der im Bereich der Aufnahmevorrichtung oder in einem Bereich vor der Aufnahmevorrichtung angeordneten Abtastvorrichtung eine Vorsteuerung zur Verstellung der Hangausgleichseinrichtung erfolgt.
